# EUROPEAN PATENT APPLICATION

(11) **EP 1 868 070 A2**
(43) Date of publication of application: **19.12.2007**
(21) Application number: 07100539.1
(22) Date of filing: 15.01.2007
(51) Int. Cl.: G06F 3/048

(54) **User interface apparatus and method**

(30) Priority: 16.06.2006 KR 20060054533
(71) Applicant: Samsung Electronics Co., Ltd., Suwon-si, Gyeonggi-Do (KR)
(72) Inventor: Park, Wan-je, Seoul (KR); Jang, Hyun-kook, Yeongtong-gu, Suwon-si Gyeonggi-do (KR); Kim, Joon-hwan, Yongin-si, Gyeonggi-do (KR); Kwon, Heui-jin, Seongnam-si, Gyeonggi-do (KR); Song, Sang-gon, Gyeongsanbuk-do (KR)
(74) Representative: Grünecker, Kinkeldey, Stockmair & Schwanhäusser Anwaltssozietät

(57) **Abstract**

A user interface apparatus and method requiring a limited number of input keys, and a computer-readable recording medium storing the same, the user interface apparatus including a display unit to display a menu; an input unit to include one or more input keys; and a control unit to control a creation of a menu screen having a layout that is visually similar to the layout of the input unit, a display of the menu on the display unit, and a selection of a menu item determined according to the layout in response to a key input via the input unit.

## Description

### CROSS-REFERENCE TO RELATED APPLICATION

This application claims the benefit of Korean Patent Application No. 2006-54533, filed on June 16, 2006, in the Korean Intellectual Property Office, the disclosure of which is incorporated herein by reference.

### BACKGROUND OF THE INVENTION

### 1. Field of the Invention

Aspects of the present invention relate to a user interface, and more particularly to, a user interface apparatus and method by which a user can use a device intuitively and easily, and a computer readable recording medium storing the method.

### 2. Description of the Related Art

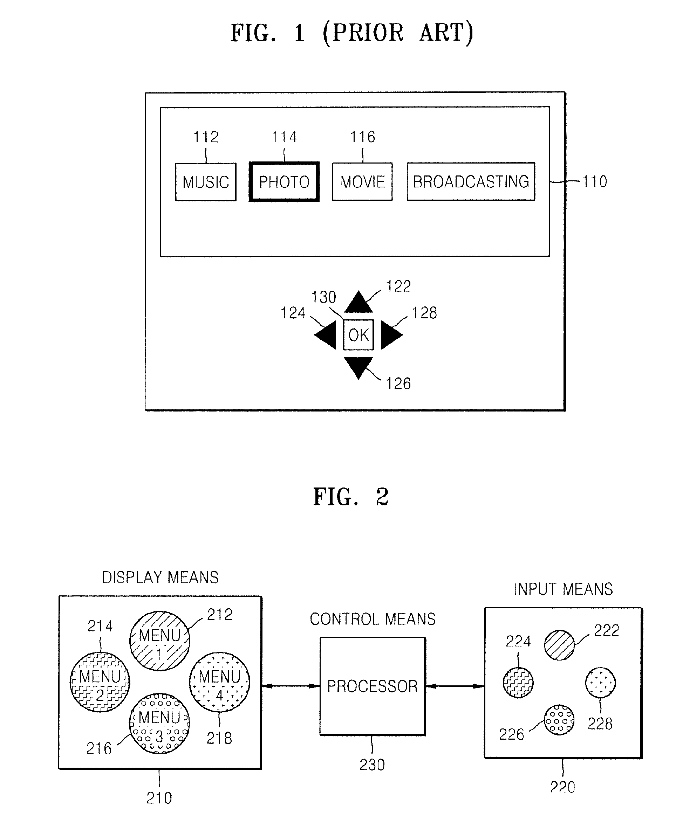

FIG. 1 is a diagram of a user interface used for a conventional mobile device. Referring to FIG. 1, a menu screen 110 arranges menu items in a line. Four direction keys 122, 124, 126, and 128 have a simple function indicating a direction. For example, when a photo menu item 114 is highlighted, if a left direction key 124 or an up direction key 122 is pressed, a music menu item 112 is highlighted, or if a right direction key 128 or a down direction key 126 is pressed, a movie menu item 116 is highlighted. In order to select a desired menu item and execute a function corresponding to the desired menu item, a direction key 122, 124, 126, and 128 is continuously pressed until the desired menu item is highlighted and then an OK button 130 is pressed.

The conventional user interface requires many button operations in order to execute a desired function, and additional buttons or input keys in order to support various functions and interactions.

### SUMMARY OF THE INVENTION

Aspects of the present invention provide a user interface apparatus and method requiring limited input keys, and a computer-readable recording medium storing the method.

According to an aspect of the present invention, there is provided a user interface apparatus comprising: a display unit to display a menu; an input unit including one or more input keys; and a control unit to control a creation of a menu screen having a visual representation that is similar to a visual representation of the input unit, a display of the menu on the display unit, and a selection of a menu item determined according to the visual representations in response to a key input via the input unit.

The control unit may create the menu screen so that the one or more input keys are consistent with one or more menu items belonging to the menu screen in terms of at least one of a color, a shape, a design, and a location.

The one or more input keys may be four input keys indicating four directions.

The control unit may control the one or more input keys to have a different function according to a type of menu screen displayed on the display unit.

The control unit may control the input unit to change the visual representation of the one or more input keys according to the type of menu screen displayed on the display unit.

The input unit may further comprise an LED control unit, wherein the one or more input keys are LED buttons.

The control unit may control the input unit to change an input key that does not correspond to the one or more menu items so that the input key is visually distinguished from other input keys.

The input unit may further comprise an LED control unit, wherein the one or more input keys are LED buttons, and the control unit instructs the LED control unit to black out the input key that does not correspond to the one or more menu items.

The input unit may comprise input keys, each having a different color.

According to another aspect of the present invention, there is provided a user interface method used by an apparatus comprising a display unit and an input unit, the method comprising: creating a menu screen having a visual representation that is similar to a visual representation of the input unit; displaying the menu screen on the display unit; and when a key is input via the input unit, performing a function corresponding to a menu item that is determined to correspond to the input key according to the layout.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a diagram of a user interface used for a conventional mobile device;
FIG. 2 is a block diagram of a user interface apparatus according to an embodiment of the present invention;
FIG. 3 is a flowchart of a user interface method according to an embodiment of the present invention;
FIG. 4 is a diagram of a user interface apparatus applied to a mobile device according to an embodiment of the present invention;
FIG. 5 illustrates a menu screen when a user selects a "play" menu item from the user interface apparatus illustrated in FIG. 4;
FIG. 6 illustrates a menu screen when a user selects a "music" category from the menu screen illustrated in FIG. 5;
FIG. 7 illustrates a menu screen when a user selects a "music2.mp3" music file item from the menu screen illustrated in FIG. 6;
FIG. 8 is a diagram of a user interface apparatus applied to a mobile device according to another embodiment of the present invention;
FIG. 9 illustrates a menu screen when a user selects a "search on a name basis" category from the user interface apparatus illustrated in FIG.8;
FIG. 10 is a diagram of a user interface apparatus applied to a mobile device according to another embodiment of the present invention; and
FIG. 11 illustrates a menu screen when a user selects an "MP" menu item from the user interface apparatus illustrated in FIG. 10.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

FIG. 2 is a block diagram of a user interface apparatus according to an embodiment of the present invention. Referring to FIG. 2, the user interface apparatus includes a display unit 210, an input unit 220 including at least one input key, and a control unit 230 that is a processor to control the user interface apparatus. The control unit 230 creates a menu screen having a layout visually similar to the layout of the input unit 220, displays the menu screen on the display unit 210, and controls a menu item 212, 214, 216, or 218 to be selected in response to a key 222, 224, 226, or 228 input via the input unit 220. The menu item 212, 214, 216, and 218 and function corresponding to each key 222, 224, 226, and 228 input are determined according to the layout of the menu screen in which the layout is similar to the layout of the input unit 220. The layout of the menu screen is provided so that input keys 222, 224, 226, and 228 of the input unit 220 are consistent with at least one of a color, a shape, a design, and a location of menu items 212, 214, 216, and 218 of the menu screen, or a combination thereof. A design of the input key may refer to a pattern, such as a checkered pattern or lines drawn across the input key. The control unit 230 can control each input key 222, 224, 226, and 228 to perform a different function according to the type of menu screen displayed on the display unit 210. For example, the control unit 230 controls input keys 222, 224, 226, and 228 to serve as direction keys on a screen and each input key 222, 224, 226, and 228 to perform a different function on another screen.

The input unit 220 includes four input keys 222, 224, 226, and 228, which are arranged similar to four direction keys. The displayed menu screen comprises four menu items 212, 214, 216, and 218, which are arranged in the same orientation as the input keys 222, 224, 226, and 228 and may, although not necessarily, have the same shape, design, and/or color as the input keys 222, 224, 226, and 228. Therefore, the user can be intuitively informed of which of the menu items 212, 214, 216, and 218 corresponds to each of the input keys 222, 224, 226, and 228, and select a desired menu item 212, 214, 216, and 218 by pressing one of the input keys 222, 224, 226, and 228.

The input keys 222, 224, 226, and 228 of the input unit 220 can, for example, be color buttons, each having a different color, or light emitting diodes (LEDs). If the input keys 222, 224, 226, and 228 are LEDs, the input unit 220 can include an LED control unit (not shown) that controls lighting, blackout, a change in colors and pictograms of the input keys 222, 224, 226, and 228. However, the constitution of the input keys 222, 224, 226, and 228 is not limited thereto and different characteristic variations may be used to distinguish between or represent each of the input keys 222, 224, 226, and 228.

The user interface, according to an embodiment of the present invention, is a dynamic interface that can change the function of the input keys 222, 224, 226, and 228 for each menu screen. In this regard, the representation of the input keys 222, 224, 226, and 228 can be changed according to the type of menu screen, i.e., according to the function of each of the input keys 222, 224, 226, and 228. The control unit 230 determines the function of each of the input keys 222, 224, 226, and 228 based on the change in menu screens, and changes the representation or color of the input keys 222, 224, 226, and 228 accordingly.

An input key that does not correspond to a menu item is visually separated from other input keys, thus distinguishing the input key that does not perform a function to the user. For example, the control unit 230 controls the input key unit 220 to black out an unnecessary input key, and if the unnecessary input key is required due to the change in menu screens, the unnecessary input key is lit up.

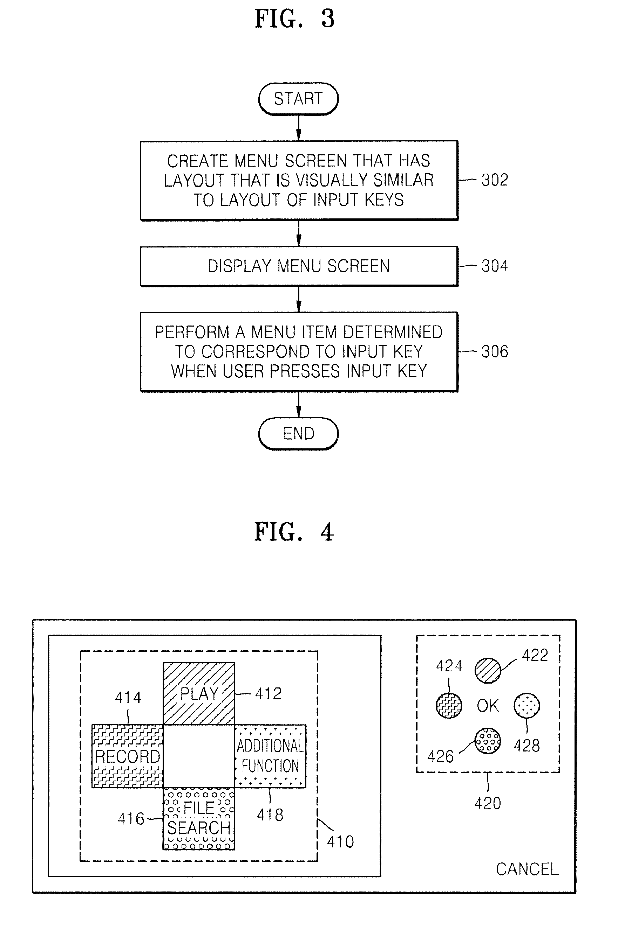

FIG. 3 is a flowchart of a user interface method according to an embodiment of the present invention. Referring to FIG. 3, the control unit 230 creates a menu screen that has a layout that is visually similar to the layout of input keys 222, 224, 226, and 228 (operation 302) and displays the menu screen (operation 304). The control unit 230 performs the function related to a menu item 212, 214, 216, and 218 corresponding to an input key 222, 224, 226, and 228 when the user presses the input key 222, 224, 226, and 228 (operation 306). The relations between input keys 222, 224, 226, and 228 and menu items 212, 214, 216, and 218 or the respective function can be determined according to the layout of the input keys 222, 224, 226, and 228 and menu screen when being designed.

FIG. 4 is a diagram of a user interface apparatus applied to a mobile device according to an embodiment of the present invention. Referring to FIG. 4, color buttons 420 are used as input keys 422, 424, 426, and 428 and menu items 412, 414, 416, and 418 of a menu screen 410 have the same locations and colors as the color buttons 420, thereby providing intuitive interaction. However, it is understood that other distinguishing characteristics, such as a shape and/or design, may be used to identify the corresponding input keys 422, 424, 426, and 428 and menu items 412, 414, 416, and 418. It is further understood that a same location of input keys and menu items refers to a same relative orientation of the input keys and the menu items.

An up key 422 has the same location and color as a "play" menu item 412, a left key 424 has the same location and color as a "record" menu item 414, a down key 426 has the same location and color as a "file search" menu item 416, and a right key 428 has the same location and color as an "additional function" menu item 418. If a user presses one of the four input keys 422, 424, 426, and 428, a menu item corresponding to the pressed input key is selected. For example, if the user presses the up key 422, the "play" menu item 412 is selected and a function corresponding to the "play" menu item 412 is performed.

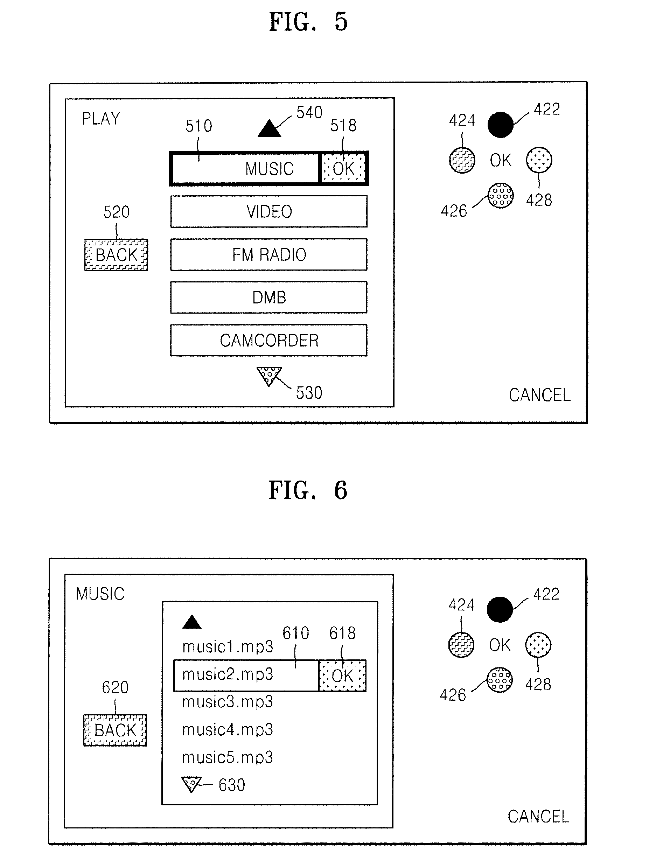

FIG. 5 illustrates a menu screen when a user selects a "play" menu item 412 from the user interface apparatus illustrated in FIG. 4. Referring to FIG. 5, a list of data categories that can be reproduced is displayed on the menu screen. Furthermore, a "Back" menu item 520 to return to a previous menu, an "OK" menu item 518 to select a currently highlighted category item 510, and an icon 530 to move a highlight down the category list each have the same shape, design, and/or color as the left key 424, the right key 428, and the down key 426, respectively. It is understood that according to other aspects, a selected menu item may be distinguished by methods other than a highlight, such as a marker or arrow identifying the selected menu item. Also, it is understood that other methods may be used to select a currently highlighted category and/or to return to a previous menu, such as by pressing an "OK" input key and/or a "Back" input key, respectively, provided on the input unit 220. According to an aspect, the "Music" 510 menu item is located at the top of the category list and is a first category of the category list, and a function of moving the highlight up is therefore unnecessary. Therefore, an icon 540 that corresponds to an up key 422 is blacked out and the up key 422 is blacked out. However, it is understood that according to other aspects, the icon 540 may not appear, or the icon 540 and the up key 422 may be distinguished by other colors or styles, if a function of moving the highlight up is unnecessary.

FIG. 6 illustrates a menu screen when a user selects a "Music" 510 menu item from the menu screen illustrated in FIG. 5. Referring to FIG. 6, a list of music files that can be reproduced is displayed on the menu screen. A "Back" menu item 620 to return to a previous menu, an "OK" menu item 618 to select a currently highlighted music file item 610, and an icon 530 to move a highlight down the list are displayed on the screen so that they are consistent with the left key 424, the right key 428, and the down key 426, respectively, in terms of color, shape, design, and/or location.

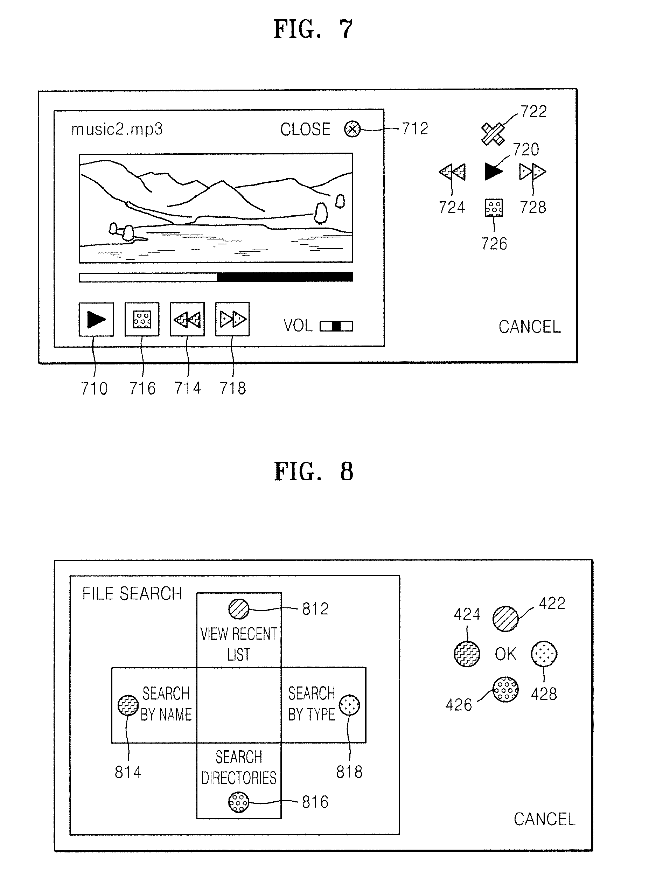

FIG. 7 illustrates a menu screen when a user selects a "music2.mp3" music file item 610 from the menu screen illustrated in FIG. 6. Referring to FIG. 7, a player to reproduce an MP3 file is displayed on the menu screen. An icon 710 corresponding to a play function, an icon 716 corresponding to a stop function, an icon 714 corresponding to a rewind function, an icon 718 corresponding to a fast forward function, and an icon 712 corresponding to a player closing function are displayed on the screen so that they are consistent with a center key 720, a down key 726, a left key 724, a right key 728, and an up key 722, respectively, in terms of color, shape, and/or design. As with the menu screen of FIG. 6, each input key 720, 722, 724, 726, and 728 has the same representation as the menu icons 710, 712, 714, 716, and 718 displayed on the menu screen.

FIG. 8 is a diagram of a user interface apparatus applied to a mobile device according to another embodiment of the present invention. Referring to FIG. 8, four graphic models 812, 814, 816, and 818 having the same respective color, design, and/or shape as four input keys 422, 424, 426, and 428 are arranged in each menu item.

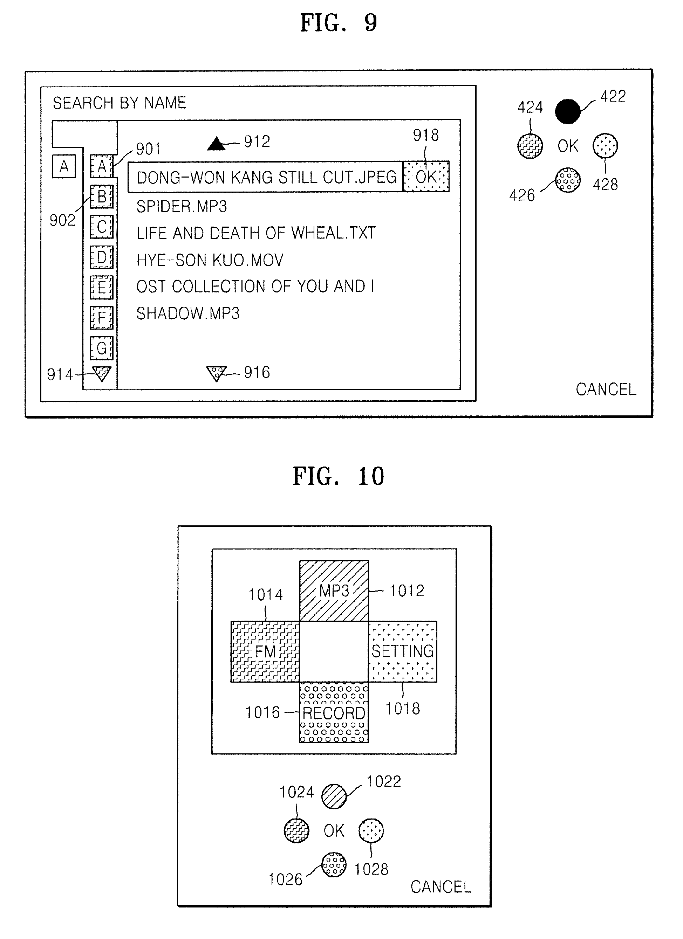

FIG. 9 illustrates a menu screen when a user selects a "search by name basis" menu item from the user interface apparatus illustrated in FIG. 8. Referring to FIG. 9, a list of files for the "search by name basis" category is displayed on the menu screen. An icon 914 corresponding to a function of sequentially selecting start characters between "A" and "Z," an "OK" menu item 918 to select a currently highlighted file, and an icon 916 to move the highlight down the list are displayed on the screen so that they are consistent with the left key 424, the right key 428, and the down key 426, respectively, in terms of color, design, shape, and/or location. Icons indicating start characters "A" 901, "B" 902, etc., have the same color as the left key 424 in order to inform the user that if the left key 424 is pressed, the start characters between "A" and "Z" can be sequentially selected. That is, whichever start character is selected, file names that begin with that character will be displayed.

FIG. 10 is a diagram of a user interface apparatus applied to a mobile device according to another embodiment of the present invention. The mobile device includes a 2 inch (113x85) liquid crystal display (LCD).

Referring to FIG. 10, an up key 1022 has the same location, design, and color as an "mp3" menu item 1012, a left key 1024 has the same location, design, and color as an "FM" menu item 1014, a down key 1026 has the same location, design, and color as a "record" menu item 1016, and a right key 1028 has the same location, design, and color as a "setting" menu item 1018. If a user presses one of the four input keys 1022, 1024, 1026, and 1028, a menu item corresponding to the pressed input key is selected and a function corresponding to the menu item is performed.

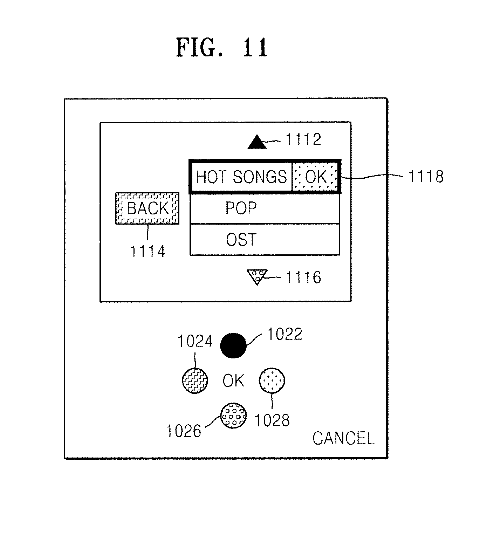

FIG. 11 illustrates a menu screen when a user selects an "MP3" menu item 1012 from the user interface apparatus illustrated in FIG. 10. Referring to FIG. 11, a list of data categories that are to be reproduced is displayed on the menu screen. A "Back" menu item 1114 to return to a previous menu, an "OK" menu item 1118 to select a currently highlighted category item, and an icon 1116 to move a highlight down the category list have the same color, shape, and/or design as the left key 1024, the right key 1028, and the down key 1026, respectively. The menu items 1114, 1116, and 1118 are consistently arranged on the screen. "Hot songs" does not need a function of moving the highlight up since "Hot songs" is a first category of the category list. Therefore, an icon 1112 that corresponds to an up key 1022 is blacked out and the up key 1022 is blacked out. However, it is understood that according to other aspects, the icon 1112 may not appear, or the icon 1112 and the up key 1022 may be distinguished by other colors or styles, if a function of moving the highlight up is unnecessary.

Aspects of the present invention can be applied to a mobile device, such as an MP3 player, a cellular phone, a personal digital assistant (PDA), or a portable multimedia player (PMP), but is not necessarily limited thereto. Aspects of the present invention can be applied to a computing system requiring a user interface apparatus. Aspects of the present invention can also be implemented as computer-readable code on a computer-readable recording medium.

According to aspects of the present invention, the layout of input keys of a device is consistent with the physical arrangement of a displayed menu corresponding to the input keys so that a user can intuitively and easily select menu items by using a limited number of input keys.

In order to use a conventional four direction key arrangement of input keys where as the four direction keys are hot keys, each input key has a function according to a menu, thereby increasing efficiency of the input keys so that the user can easily select one of four categories in a variety of environments.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A user interface apparatus comprising:
a display unit to display a menu screen comprising one or more menu items;
an input unit comprising one or more input keys; and
a control unit to control a creation of the menu screen, a display of the menu screen on the display unit, and a selection of the one or more menu items, wherein
the one or more menu items have a visual representation that is similar to a visual representation of the one or more input keys such that each of the one or more menu items is visually similar to one of the one or more input keys, and the control unit controls the selection of one of the one or more menu items according to a key input of an input key visually similar to the one menu item.

2. The apparatus as claimed in claim 1, wherein the control unit creates the menu screen so that the visual representation of the one or more menu items is similar to the visual representation of the one or more input keys in terms of at least one of a color, a shape, a design, and a location.

3. The apparatus as claimed in claim 1, wherein the control unit creates the menu screen so that the visual representation of the one or more menu items is similar to the visual representation of the one or more input keys in terms of at least one of a color, a shape, and a design.

4. The apparatus as claimed in claim 1, wherein the one or more input keys are four input keys indicating four directions.

5. The apparatus as claimed in claim 1, wherein the control unit controls each of the one or more input keys to have a function according to a type of the menu screen displayed on the display unit.

6. The apparatus as claimed in claim 1, wherein the control unit controls the input unit to change the visual representation of the one or more input keys according to a type of the menu screen displayed on the display unit.

7. The apparatus as claimed in claim 1, wherein the input unit further comprises an LED control unit, wherein the one or more input keys are LED buttons.

8. The apparatus as claimed in claim 7, wherein the LED control unit controls a changing of the visual representation of the one or more input keys according to a type of the menu screen displayed on the display unit.

9. The apparatus as claimed in claim 6, wherein the control unit controls the input unit to change an input key that does not correspond to any of the one or more menu items so that the input key is visually distinguished from other input keys.

10. The apparatus as claimed in claim 8, wherein the control unit controls the LED control unit to change an input key that does not correspond to any of the one or more menu items so that the input key is visually distinguished from other keys.

11. The apparatus as claimed in claim 10, wherein the control unit controls the LED control unit to black out the input key that does not correspond to any of the one or more menu items.

12. The apparatus as claimed in claim 1, wherein the input unit comprises a first input key having a first color and a second input key having a second color, wherein the first color is different from the second color.

13. A user interface method to control an apparatus comprising a display unit and an input unit, the method comprising:
creating a menu screen comprising one or more menu items having a visual representation that is similar to a visual representation of one or more input keys comprised in the input unit, such that each of the one or more menu items is visually similar to one of the one or more input keys;
displaying the menu screen on the display unit; and
performing a function of a selected input key corresponding to a menu item that is visually similar to the selected input key.

14. The method as claimed in claim 13, wherein the creating of the menu screen comprises:
creating the menu screen so that the visual representation of the one or more menu items is similar to the visual representation of the one or more input keys in terms of at least one of a color, a shape, a design, and a location.

15. The method as claimed in claim 13, wherein the creating of the menu screen comprises:
creating the menu screen so that the visual representation of the one or more menu items is similar to the visual representation of the one or more input keys in terms of at least one of a color, a shape, and a design.

16. The method as claimed in claim 13, wherein the performing of the function comprises:
controlling each of the one or more input keys to have a function according to a type of the menu screen displayed on the display unit.

17. The method as claimed in claim 13, further comprising:
controlling the input unit to change the visual representation of the one or more input keys according to a type of the menu screen displayed on the display unit.

18. The method as claimed in claim 13, further comprising:
controlling the input unit to change an input key that does not correspond to any of the one or more menu items so that the input key is visually distinguished from other input keys.

19. The method as claimed in claim 18, wherein the controlling of the input unit comprises:
blacking out the input key that does not correspond to any of the one or more menu items.

20. A user interface apparatus comprising:
a display unit to display a menu screen comprising one or more menu items;
an input unit comprising one or more input keys; and
a control unit to control a creation of the menu screen, a display of the menu screen on the display unit, and a selection of the one or more menu items, wherein
the one or more menu items have a visual representation that is similar to a visual representation of the one or more input keys such that each of the one or more menu items is visually similar to one of the one or more input keys in terms of at least one of a color, a shape, and a design, and the control unit controls the selection of one of the one or more menu items according to a key input of an input key visually similar to the one menu item.

21. The apparatus as claimed in claim 20, wherein the control unit creates the menu screen so that the visual representation of the one or more menu items is further similar to the visual representation of the one or more input keys in terms of a location.

22. The apparatus as claimed in claim 20, wherein the control unit controls each of the one or more input keys to have a function according to a type of the menu screen displayed on the display unit.

23. The apparatus as claimed in claim 20, wherein the control unit controls the input unit to change the visual representation of the one or more input keys according to a type of the menu screen displayed on the display unit.

24. The apparatus as claimed in claim 20, wherein the input unit further comprises an LED control unit,
wherein the one or more input keys are LED buttons.

25. The apparatus as claimed in claim 23, wherein the control unit controls the input unit to change an input key that does not correspond to any of the one or more menu items so that the input key is visually distinguished from other input keys.

26. The apparatus as claimed in claim 25, wherein the control unit controls the input unit to black out the input key that does not correspond to any of the one or more menu items.

27. The apparatus as claimed in claim 20, wherein the input unit comprises a first input key having a first color and a second input key having a second color, wherein the first color is different than the second color.

28. A user interface method to control an apparatus comprising a display unit and an input unit, the method comprising:
creating a menu screen comprising one or more menu items having a visual representation that is similar to a visual representation of one or more input keys comprised in the input unit, such that each of the one or more menu items is visually similar to one of the one or more input keys in terms of at least one of a color, a shape, and a design;
displaying the menu screen on the display unit; and
performing a function of a selected input key corresponding to a menu item that is visually similar to the selected input key.

29. The method as claimed in claim 28, wherein the creating of the menu screen comprises:
creating the menu screen so that the visual representation of the one or more menu items is further similar to the visual representation of the one or more input keys in terms of a location.

30. The method as claimed in claim 28, wherein the performing of the function comprises:
controlling each of the one or more input keys to have a function according to a type of the menu screen displayed on the display unit.

31. The method as claimed in claim 28, further comprising:
controlling the input unit to change the visual representation of the one or more input keys according to a type of the menu screen displayed on the display unit.

32. The method as claimed in claim 28, further comprising:
controlling the input unit to change an input key that does not correspond to any of the one or more menu items so that the input key is visually distinguished from other input keys.

33. The method as claimed in claim 32, wherein the controlling of the input unit comprises:
blacking out the input key that does not correspond to any of the one or more menu items.

34. A computer readable recording medium encoded with the method of claim 13 implemented by a computer.

35. A computer readable recording medium encoded with the method of claim 28 implemented by a computer.
